# EUROPÄISCHE PATENTSCHRIFT

(11) **EP 3 218 246 B1**
(45) Veröffentlichungstag und Bekanntmachung des Hinweises auf die Patenterteilung: **20.02.2019**
(21) Anmeldenummer: 15766532.4
(22) Anmeldetag: 22.09.2015
(51) Int. Cl.: B62D 1/184, B62D 1/19

(54) **LENKSÄULE MIT LÄNGSANSCHLAG MIT EINSTELLBARER FREIGABEFUNKTION FÜR CRASH**
STEERING COLUMN WITH LONGITUDINAL STOP HAVING AN ADJUSTABLE RELEASE FUNCTION IN THE EVENT OF A CRASH
COLONNE DE DIRECTION COMPORTANT UNE BUTÉE LONGITUDINALE PRÉSENTANT UNE FONCTION DE LIBÉRATION EN CAS D'ACCIDENT

(30) Priorität: 10.11.2014 DE 102014016510
(43) Veröffentlichungstag der Anmeldung: 20.09.2017
(73) Patentinhaber: ThyssenKrupp Presta AG, 9492 Eschen (LI); thyssenkrupp AG, 45143 Essen (DE)
(72) Erfinder: HUBER, Sebastian, A-6811 Göfis (AT); MURTEZI, Mergim, CH-9476 Weite (CH)
(74) Vertreter: thyssenkrupp Intellectual Property GmbH
(86) Internationale Anmeldenummer: PCT/EP2015/071729
(87) Internationale Veröffentlichungsnummer: WO 2016/074838

(56) Entgegenhaltungen:
- EP-A1- 2 607 203
- EP-A1- 2 923 921
- DE-A1-102011 056 351
- US-A1- 2009 145 258
- US-A1- 2010 300 236

## Beschreibung

Die Erfindung betrifft eine verstellbare Lenksäule für ein Kraftfahrzeug nach dem Oberbegriff des Patentanspruchs 1. Weiter betrifft die Erfindung einen Anschlagkörper für eine verstellbare Lenksäule nach dem Oberbegriff des Patentanspruchs 9 und ein Verfahren zur Verstellung einer Lenksäule entsprechend dem Oberbegriff des Patentanspruchs 20.

Gattungsgemässe Lenksäulen sind in einer Vielzahl von Ausgestaltungsformen bekannt. Sie werden auch als verstellbare Lenksäulen bezeichnet und erlauben es, die Position des Lenkrades in Richtung parallel zur Lenkspindellängsachse zu verstellen und/oder eine Höhenverstellung in einer Richtung quer zur Lenkspindellängsachse vorzunehmen. Während der Fahrt ist die Manteleinheit in ihrer Position in der Konsoleneinheit mittels des Feststellmechanismus fixiert. Wird der Feststellmechanismus durch Betätigen eines bewegbar gelagerten Feststellelementes in die Freigabestellung gebracht, so kann die Manteleinheit in zumindest einer Richtung parallel und/oder quer zur Lenkspindellängsachse relativ zur fahrzeugfesten Konsoleneinheit und damit die Lage des an der Lenkspindel angebrachten Lenkrades verstellt werden. Bringt man dann das Feststellelement wieder in die Verriegelungsstellung, so ist die Manteleinheit wieder an der Konsoleneinheit festgehalten. Im Normalbetrieb bewegt sich die Manteleinheit in der Verriegelungsstellung des Feststellelementes nicht relativ zur Konsoleneinheit. Anders ist die Situation in dem Fall, in dem das Fahrzeug mit einem anderen Fahrzeug oder Gegenstand kollidiert. In diesem Fall, dem sogenannten Crashfall, soll das an der Lenkspindel befestigte Lenkrad nicht starr in seiner Position verharren, sondern im Falle eines Aufpralls des Fahrzeuglenkers auf das Lenkrad zurückweichen und z. B. in Richtung zum Motorraum verschoben werden. In vielen Fällen soll bei diesem Zurückweichen die Bewegungsenergie des Fahrers absorbiert werden. Hierfür ist es bei gattungsgemässen Lenksäulen bekannt, den Feststellmechanismus so auszulegen, dass er eine Verschiebung der Manteleinheit relativ zur Konsoleneinheit auch in der Verriegelungsstellung des Feststellelementes zulässt, wenn im Falle einer Kollision des Fahrzeugs der Fahrzeuglenker auf das Lenkrad geschleudert wird.

Die DE102011056351A1 offenbart eine Lenksäule für ein Kraftfahrzeug umfassend ein Führungsrohr, das entlang seiner Längsachse verstellbar ist, wobei zwei Anschläge vorgesehen sind, die bei Einstellung eines Bedienhebels in einer ersten Situation zum Verstellen des Führungsrohrs in Längsrichtung miteinander kollidierbar sind und bei einer Einstellung des Bedienhebels in einer zweiten Situation zum Verklemmen des Führungsrohrs nicht miteinander kollidierbar sind. Durch die Ausbildung starrer Anschläge kann es jedoch im vollständig eingeschobenen Zustand der Lenksäule zu einer elastischen Rückfederung kommen, die beim erneuten Betätigen des Bedienhebels zu einem Verklemmen der Lenksäule führen kann. Auch kann die Beschränkung des Verstellbereichs dadurch ungewollt aufgehoben werden, wodurch im Crashfall der Verschiebeweg für eine Energieabsorption unkontrolliert beschränkt ist.

Ausgehend von dem bekannten Stand der Technik ist es eine Aufgabe der vorliegenden Erfindung, eine Lenksäule mit einer verbesserten Anschlagvorrichtung bereitzustellen. Diese Aufgabe wird mittels einer Lenksäule mit den Merkmalen des Anspruchs 1 gelöst. Vorteilhafte Ausgestaltungen ergeben sich aus den Unteransprüchen.

Ein Verfahren zur Lösung der Aufgabe wird in den Ansprüchen 20 und 21 angegeben. Entsprechend wird eine Lenksäule für ein Kraftfahrzeug vorgeschlagen, umfassend eine Manteleinheit, in der eine Lenkspindel um deren Lenkspindellängsachse drehbar gelagert ist, und einer, an dem Kraftfahrzeug fixierten oder fixierbaren Konsoleneinheit , wobei die Manteleinheit in oder an der Konsoleneinheit in zumindest einer Richtung parallel und/oder quer zur Lenkspindellängsachse verstellbar gehalten und von einem Feststellmechanismus in voneinander verschiedenen Positionen feststellbar ist und der Feststellmechanismus zumindest ein um eine Feststellelementschwenkachse drehbar gelagertes Feststellelement aufweist, wobei die Manteleinheit in zumindest einer Verriegelungsstellung des Feststellelementes in ihrer Position in oder an der Konsoleneinheit festgestellt ist und in zumindest einer Freigabestellung des Feststellelementes die Manteleinheit relativ zur Konsoleneinheit in zumindest einer der Richtungen parallel und/oder quer zur Lenkspindellängsachse verstellbar ist, wobei die Lenksäule zumindest einen bewegbar gelagerten und mit dem Feststellelement direkt oder indirekt zusammenwirkenden Anschlagkörper aufweist, welcher in der Freigabestellung des Feststellelementes in einer ersten Stellung angeordnet ist, in der er die Verstellbarkeit der Manteleinheit relativ zur Konsoleneinheit in zumindest einer der Richtungen parallel und/oder quer zur Lenkspindellängsachse begrenzt ist, und in der Verriegelungsstellung des Feststellelementes in zumindest einer zweiten Stellung angeordnet ist, in der er ausser Eingriff mit der Manteleinheit steht. Erfindungsgemäß weist der Anschlagkörper eine Anschlagfläche auf, deren Abstand zur Feststellelementschwenkachse in der Freigabestellung größer ist, als in der Verriegelungsstellung.

Gemäss der Erfindung wird eine Anschlagfläche des Anschlagkörpers eingesetzt, welcher direkt oder indirekt mit dem Feststellelement zusammenwirkt und die Anschlagfläche einen größeren Abstand zu der Feststellelementschwenkachse in der Freigabestellung aufweist, als in der Verriegelungsstellung. Mit anderen Worten ist die Anschlagsfläche gegenüber der Feststellelementschwenkachse verschiebbar, so dass diese in der Freigabestellung mehr von der Feststellelementschwenkachse beabstandet ist, als in der Verriegelungsstellung. Es erfolgt somit eine Verschiebung der Anschlagfläche des Anschlagkörpers gegenüber der Feststellelementschwenkachse während der Überführung von der Verriegelungsstellung in die Freigabestellung, so dass der Abstand zwischen der Anschlagfläche und der Feststellelementschwenkachse vergrößert wird.

Die Vergrößerung des Abstandes wird dadurch realisiert, dass die Öffnungsbewegung des Feststellelements, das ist die Bewegung aus der Verriegelungsstellung in die Freigabestellung, zumindest teilweise umgesetzt wird in eine Translationsbewegung des Anschlagkörpers, nämlich in eine Verschiebung mit einer Bewegungskomponente in Normalenrichtung der Anschlagfläche. Dabei erfolgt die Translation bevorzugt parallel zur Lenkspindellängsachse, d.h. in Längsrichtung der Manteleinheit, und zwar entgegen der Bewegungsrichtung der Manteleinheit im Crashfall relativ zur Konsoleneinheit. Entsprechend umgekehrt wird der Abstand zwischen der Anschlagfläche und der Feststellelementachse bei der Schließbewegung des Feststellelements, also der Bewegung aus der Freigabestellung in die Verriegelungsstellung, zumindest teilweise umgesetzt in eine Verschiebung des Anschlagkörpers mit einer Bewegungskomponente entgegen der Normalenrichtung der Anschlagfläche, d.h. der Abstand zwischen der Anschlagfläche und der Feststellelementschwenkachse wird verkleinert. Dabei kann die Umsetzung einer Bewegung des Feststellelements in eine Bewegung des Anschlagkörpers direkt oder indirekt erfolgen.

Bevorzugt ist der Anschlagkörper einteilig ausgebildet. Das heißt der Körper ist ein einzelnes integrales Bauteil, das nicht durch ein Zusammensetzen mehrerer Bauteile mittels Fügeoperationen gebildet ist. Allerdings kann der Anschlagkörper auch aus einem Mehrkomponenten-Kunststoff gebildet sein, der bevorzugt in einem Spritzgussverfahren hergestellt ist.

Dabei ist vorgesehen, dass der Anschlagkörper in der Freigabestellung des Feststellelementes, in der die Manteleinheit in ihrer Position relativ zur Konsoleneinheit eingestellt werden kann, die Verstellbarkeit der Manteleinheit, also den möglichen Verstellbereich begrenzt. In der Verriegelungsstellung des Feststellelementes, also in der Normalbetriebsstellung, in der das Fahrzeug auch bewegt wird, ist hingegen vorgesehen, dass der Anschlagkörper in eine Stellung gebracht ist, in der er nicht mit der Manteleinheit in Eingriff steht, also ausser Eingriff mit der Manteleinheit angeordnet ist bzw. die Manteleinheit freigibt. Hierdurch wird erreicht, dass im Fall einer Kollision, bei der sich das Feststellelement in der Verriegelungsstellung befindet, der Anschlagkörper keinen Einfluss auf das Verschieben der Manteleinheit relativ zur Konsoleneinheit hat.

Im Gegensatz zum genannten Stand der Technik ist die Anschlagfläche gegenüber der Feststellelementschwenkachse verschiebbar, wodurch erreicht wird, dass wenn es im vollständig eingeschobenen Zustand der Lenksäule zu einer elastischen Rückfederung des Anschlagkörpers kommt, bei einer erneuten Betätigen des Feststellelements es nicht zu einem Verklemmen der Lenksäule kommt. Weiterhin kann dadurch die Beschränkung des Verstellbereichs sicher aufrechterhalten werden, wodurch im Crashfall der Verschiebeweg für eine Energieabsorption sichergestellt ist und somit die volle Funktionstüchtigkeit stets gewährleistet werden kann.

Das Feststellelement kann grundsätzlich auch motorisch angetrieben sein, um von der Verriegelungsstellung in die Freigabestellung und wieder zurück gebracht werden zu können. Einfachere und kostengünstigere Varianten sehen jedoch vor, dass das Feststellelement von Hand betätigt werden kann bzw. eine von Hand betätigbare Handhabe aufweist. Diese kann z. B. direkt oder indirekt an der Konsoleneinheit bewegbar gelagert sein. Das Feststellelement kann grundsätzlich verschiebbar und/oder drehbar gelagert sein. Bevorzugte Ausgestaltungsformen sehen vor, dass das Feststellelement mit einem von Hand betätigbaren, um die Feststellelementschwenkachse drehbaren oder schwenkbaren Hebel gekoppelt ist.

Die Manteleinheit der Lenksäule kann verschiedenste Ausgestaltungsformen aufweisen. In der einfachsten Ausführung ist die Manteleinheit beispielsweise ein zylindrisches Rohr. Weiterhin ist es möglich, dass die Manteleinheit ein eckiges Hohlprofil oder ein offenes Profil aufweist. Aus dem Stand der Technik sind solche Ausgestaltungsformen hinreichend bekannt.

Bei bevorzugten Ausgestaltungsformen ist vorgesehen, dass die Lenksäule zumindest einen Gegenanschlag, vorzugsweise zumindest zwei Gegenanschläge, aufweist, wobei die Anschlagfläche des Anschlagkörpers in der Freigabestellung des Feststellelementes zur Begrenzung der Verstellbarkeit der Manteleinheit relativ zur Konsoleneinheit in zumindest einer der Richtungen parallel und/oder quer zur Lenkspindellängsachse mit dem Gegenanschlag, vorzugsweise mit den Gegenanschlägen, zusammenwirkt. Aktiv wird dieses Zusammenwirken dann in der Regel erst, wenn die Anschlagfläche des Anschlagkörpers auf den jeweiligen Gegenanschlag trifft. In diesem Falle ist oder sind dann der Gegenanschlag oder die Gegenanschläge günstigerweise direkt oder indirekt in oder an der Manteleinheit angeordnet. Mit Vorteil ist der Gegenanschlag direkt als Ausbuchtung in der Manteleinheit, im Fall, dass die Manteleinheit als Blechumformteil ausgebildet ist, bevorzugt mittels Blechumformung, gebildet.

Eine Besonderheit der erfindungsgemäßen Gestaltung ist, dass der Anschlagkörper mit seiner Anschlagfläche nicht wie im Stand der Technik nur in quer in den Bewegungsweg eines Gegenanschlags eingebracht wird, sondern zusätzlich in Richtung der Lenkspindellängsachse verlagert wird, d.h. parallel zur Bewegung in Längsrichtung der Manteleinheit relativ zur Konsoleneinheit, was der Bewegungsrichtung des Gegenanschlags entspricht. Im Einzelnen bewirkt die Vergrößerung des Abstands zwischen der Anschlagfläche des Anschlagkörpers und der Feststellelementschwenkachse bei der Überführung des Feststellelements aus der Verriegelungsstellung in die Freigabestellung eine Verkleinerung des Abstands zwischen der Anschlagfläche und dem Gegenanschlag. Umgekehrt erfolgt bei einer Verkleinerung des Abstands zwischen der Anschlagfläche des Anschlagkörpers und der Feststellelementschwenkachse bei der Überführung des Feststellelements aus der Freigabestellung in die Verriegelungsstellung eine Vergrößerung des Abstands zwischen der Anschlagfläche und dem Gegenanschlag.

Um fixe Anschläge in der Freigabestellung zu bilden, ist günstigerweise vorgesehen, dass der Anschlagkörper in seiner Lage, in Richtung der Verstellbarkeit der Manteleinheit relativ zur Konsoleneinheit gesehen, in oder an der Konsoleneinheit fixiert ist und der oder die Gegenanschlag in seiner bzw. ihrer Lage, in Richtung der Verstellbarkeit der Manteleinheit relativ zur Konsoleneinheit gesehen, in oder an der Manteleinheit fixiert ist oder sind. Dies kann in einfacher Weise dadurch erreicht werden, dass der Anschlagkörper auf dem als Spannbolzen ausgebildeten Feststellelement angeordnet ist. Dabei ist der Anschlagkörper in Verschieberichtung mit einem Formschluss auf dem Spannbolzen festgesetzt.

Hierbei ist klarzustellen, dass die Anschlagfläche des Anschlagkörpers bzw. der oder die Gegenanschläge, um die Anschlagfunktion bereitzustellen, nur in Richtung der Verstellbarkeit der Manteleinheit relativ zur Konsoleneinheit gesehen und in der Freigabestellung, fix bzw. fixierbar sein muss bzw. müssen. In anderen Richtungen und im Rahmen der Überführung zwischen der Freigabestellung und der Verriegelungsstellung können sie durchaus bewegbar gelagert sein, so wie mit der erfindungsgemässen Verschiebung der Anschlagfläche des Anschlagkörpers gegenüber der Feststellelementschwenkachse während der Überführung von der Verriegelungsstellung in die Freigabestellung, so dass der Abstand zwischen der Anschlagfläche und der Feststellelementschwenkachse vergrößert wird. Dies kann durch eine zumindest teilweise Umsetzung einer Rotationsbewegung der Feststellelementschwenkachse in eine Translationsbewegung des Anschlagkörpers erfolgen, beispielsweise durch eine mechanische Umsetzungseinrichtung.

In einer bevorzugten Ausführungsform ist der Anschlagkörper um die Feststellelementschwenkachse, bevorzugt auf dem Spannbolzen, verdrehbar angeordnet. Durch diese Verdrehbewegung um die Feststellelementschwenkachse kann der Anschlagkörper zwischen der Freigabestellung und der Verriegelungsstellung zusammen mit dem Feststellelement hin und her verschwenkt werden. Durch diese Verdrehung bzw. Verschwenkung um die Feststellelementschwenkachse besteht somit eine Möglichkeit, den Anschlagkörper in der Verriegelungsstellung des Feststellelementes ausser Eingriff mit der Manteleinheit zu bringen.

In einer bevorzugten Ausführungsform umfasst das Feststellelement einen Nocken oder einen Nockenabschnitt, wobei dieser Nocken oder Nockenabschnitt mit einer Steuerfläche des Anschlagkörpers zusammenwirkt. Durch das Zusammenwirken des Nockens oder des Nockenabschnitts mit der Steuerfläche des Anschlagkörpers erfolgt bei der Überführung in Freigabestellung die Vergrößerung des Abstands zwischen der Anschlagfläche des Anschlagkörpers und der Feststellelementschwenkachse gegenüber des Abstandes in der Verriegelungsstellung. Während der Überführung aus der Freigabestellung heraus in die Verriegelungsstellung wird dieser Abstand wieder verkleinert. Mit anderen Worten erfolgt durch das Zusammenwirken des Nockens oder des Nockenabschnitts mit der Steuerfläche eine Verschiebung der Anschlagsfläche und somit des Anschlagkörpers gegenüber der Feststellelementschwenkachse, so dass dieser Nocken oder der Nockenabschnitt einen entsprechenden Hub bereitstellt, der eine erfindungsgemäße Veränderung des Abstands zwischen Anschlagsfläche und Feststellelementschwenkachse bewirkt.

Der Nocken oder Nockenabschnitt ist bezüglich der Feststellelementschwenkachse radial exzentrisch vorstehend ausgebildet und kontaktiert mit seiner Nockenkontur die Steuerfläche des Anschlagkörpers. Auf diese Weise bildet ein Nocken zusammen mit der Steuerfläche eine mechanische Umsetzungseinrichtung zur Umsetzung einer Rotationsbewegung der Feststellelementschwenkachse in eine Translationsbewegung des Anschlagkörpers. Dadurch wird die Anschlagfläche mit einer Bewegungskomponente in Normalenrichtung der Anschlagfläche verschoben. Eine Öffnungsbewegung des Feststellelements, das ist die Bewegung aus der Verriegelungsstellung in die Freigabestellung, wird auf diese Weise zumindest teilweise umgesetzt wird in eine Translationsbewegung des Anschlagkörpers, nämlich in eine Verschiebung mit einer Bewegungskomponente in Normalenrichtung der Anschlagfläche. Die Translation erfolgt bevorzugt parallel zur Längsachse der Manteleinheit, und zwar entgegen der Bewegungsrichtung der Manteleinheit im Crashfall relativ zur Konsoleneinheit

In einer weiteren bevorzugten Ausführungsform ist der Anschlagkörper mit einem Vorspannelement gekoppelt. Dieses Vorspannelement spannt den Anschlagkörper so vor, dass dieser in sicherer Art und Weise in die ihm zugewiesene Position in der Freigabestellung und in der Verriegelungsstellung überführt werden kann. Bevorzugt ist das Vorspannelement sowohl in der Freigabestellung als auch in der Verriegelungsstellung unter Vorspannung. Bei der Überführung aus der Freigabestellung in die Verriegelungsstellung wird das Vorspannelement, das auch als Feder bezeichnet werden kann, weiter vorgespannt, um bei der Überführung zurück in die Freigabestellung den mit dem Vorspannelement gekoppelten Anschlagkörper sicher in seiner Bewegung zu unterstützen. Weiterhin dient das Vorspannelement zur Minimierung von Geräuschen die während der Überführung zwischen der Freigabestellung und Verrieglungsstellung entstehen. Vorzugsweise kann das Federelement als Blattfeder oder Schraubenfeder ausgeführt sein, da diese Federtypen einen einfachen Aufbau aufweisen und leicht mit dem Anschlagkörper koppelbar sind. Weiterhin kann es von Vorteil sein, das Vorspannelement und den Anschlagkörper als ein einziges integrales Bauteil auszuführen.

In einer bevorzugten Ausführungsform besteht der Anschlagkörper zumindest teilweise aus einem Kunststoff. Durch die Verwendung eines Kunststoffes können zum einen die Kosten für den Anschlagkörper reduziert werden und zum anderen ergibt sich eine Reduzierung der Masse. Vorzugsweise ist der gesamte Anschlagkörper aus einem einzigen Kunststoff beschaffen. Dadurch können die Produktionskosten nochmals für den Anschlagkörper reduziert werden. Weiterhin ergibt sich der Vorteil, dass bei einem Anschlagen der Anschlagsfläche des Anschlagkörpers zur Begrenzung der Verstellung eine gewisse Dämpfung und Reduzierung von Geräuschen erreicht wird. Dies führt zu einer Komforterhöhung für den Fahrzeugführer.

In einer weiteren bevorzugten Ausführungsform erfolgt während der Überführung ausgehend von der Verriegelungsstellung in die Freigabestellung und/oder der Überführung ausgehend von der Freigabestellung in die Verriegelungsstellung eine Verschiebung des Anschlagkörpers im Wesentlichen in Richtung der Lenkspindellängsachse. Durch die Verschiebung des Anschlagkörpers in Richtung der Lenkspindellängsachse erfolgt erfindungsgemäß die Veränderung des Abstandes zwischen der Anschlagfläche des Anschlagkörper und der Feststellelementschwenkachse, so dass dieser Abstand in der Freigabestellung größer ist, als in der Verriegelungsstellung. Vorzugsweise wird bei einem vorhandenen Gegenanschlag der Anschlagkörper auf diesen zu verschoben, dadurch kann in einem besonderen Maße die Beschränkung des Verstellbereichs sicher aufrechterhalten werden, wodurch im Crashfall der Verschiebeweg für eine Energieabsorption sichergestellt ist.

In einer bevorzugten Ausführungsform weist die Differenz des Abstandes in der Freigabestellung und des Abstands in der Verriegelungsstellung einen Wert zwischen 0,2 mm und 5 mm auf. Durch diesen Wert der Differenz der Abstände kann eine ausreichende Verschiebung erreicht werden, um den erfindungsgemässen Anschlag vorteilhaft auszubilden. Mit anderen Worten ist diese Differenz des Abstandes in der Freigabestellung und des Abstand in der Verriegelungsstellung die Vergrößerung des Abstandes zwischen der Anschlagsfläche des Anschlagkörpers und der Feststellelementschwenkachse zwischen der Verriegelungsstellung und der Freigabestellung.

Im Rahmen von Versuchen zeigte sich, dass die Differenz des Abstandes in der Freigabestellung und des Abstand in der Verriegelungsstellung einen Wert zwischen 0,8 mm und 2,0 mm besonders vorteilhaft ist, da eine solche Ausgestaltung einen geringen Bauraum erfordert. Ganz besonders bevorzugt ist der Wert der Differenz des Abstandes in der Freigabestellung und des Abstand in der Verriegelungsstellung zwischen 0,5 mm und 1,0 mm.

Die Aufgabe wird weiterhin gelöst mittels eines Anschlagkörpers umfassend einen Kopplungsabschnitt zur Aufnahme eines Feststellelements einer Lenksäule, und zumindest eine Anschlagfläche zum Zusammenwirken mit einem Gegenanschlag der Lenksäule. Erfindungsgemäß ist vorgesehen, dass der Kopplungsabschnitt (84) eine Steuerfläche (82) umfasst zum Zusammenwirken mit einem Nockenabschnitt (71) an dem Feststellelement (15),

Der erfindungsgemäße Anschlagkörper zeichnet sich dadurch aus, dass eine Steuerfläche als Funktionselement einer Umsetzeinrichtung zur Umsetzung einer Rotationsbewegung eines Feststellelements in eine erfindungsgemäße Translationsbewegung der Anschlagfläche des Anschlagkörpers in den Anschlagkörper integriert ist. Der Nockenabschnitt des Feststellelements kontaktiert mit seiner exzentrischen Nockenkontur tangential die Steuerfläche am oder im Kopplungsabschnitt, so dass bei einer Rotation des Nockenabschnitts eine Kraft mit einer Kraftkomponente in Normalenrichtung, d.h. senkrecht auf die Steuerfläche ausgeübt wird. Dadurch kann der Anschlagkörper translatorisch bewegt werden. Auf diese Weise bildet der Nockenabschnitt zusammen mit dem Kopplungsabschnitt ein mechanisches Umsetzungsgetriebe, welches eine Rotations- bzw. Schwenkbewegung des Feststellelements in eine translatorische Verschiebung des Anschlagkörpers umsetzt. Die Feststellelementschwenkachse ist quer, bevorzugt senkrecht zur Lenkspindellängsachse angeordnet, so dass bei einer Drehung des Nockens oder Nockenabschnitts über die Nockenkontur eine Kraft auf die Steuerfläche ausgeübt wird, so dass eine Verschiebung des Anschlagkörpers quer zur Feststellelementschwenkachse parallel zur Lenkspindellängsachse erfolgt, d.h. in Richtung der Längsachse der Manteleinheit.

Die Steuerfläche kann vorzugsweise tangential zu einem Umfangskreis um den Nockenabschnitt des Feststellelements angeordnet sein. Dadurch wird erreicht, dass der Nocken oder Nockenabschnitt bei einer Drehung bzw. Verschwenkung des Feststellelements am Auflagepunkt seiner Nockenkontur eine Kraft auf die Steuerfläche ausübt, die senkrecht zur Feststellelementschwenkachse, also der Drehachse des Nockens radial nach außen gerichtet ist.

Dadurch, dass die Steuerfläche parallel zur Feststellelementschwenkachse ausgerichtet ist und die Anschlagfläche parallel zur Feststellelementschwenkachse ausgerichtet ist, wobei die Normalenrichtungen der Steuerfläche und der Anschlagfläche eine gemeinsame Vektor-Komponente haben, führt eine Bewegung des Anschlagkörpers in Normalenrichtung der Steuerfläche zu einer Bewegung der Anschlagfläche mit zumindest einer Bewegungskomponente in Normalenrichtung der Anschlagfläche.

Bevorzugt ist vorgesehen, dass im eingebauten Zustand der Kopplungsabschnitt mit einer Ausnehmung das Feststellelement zumindest zum Teil mit einem Zwischenraum umschließt. Die Ausnehmung kann als durchgehende Öffnung oder Aussparung ausgestaltet sein, die den Anschlagkörper in Richtung der Feststellelementschwenkachse durchsetzt. Im eingebauten Zustand befindet sich der Nockenabschnitt des Feststellelements in der Öffnung, wobei die dem Nocken oder Nockenabschnitt zugeordnete Steuerfläche tangential auf einer Innenfläche des Kopplungsabschnitts ausgebildet ist. Konkret kann ein Teil der Innenwandung der Ausnehmung bzw. der Öffnung als Steuerfläche ausgebildet sein. Bei einer Drehung des Feststellelements kann der Nocken oder Nockenabschnitt mit seiner Nockenkontur mit der Steuerfläche in Kontakt kommen und eine Kraft in Richtung der Lenkspindellängsachse auf den Anschlagkörper ausüben, die zu einer translatorischen Bewegung des Anschlagkörpers in dieser Richtung führt.

Die Ausnehmung oder Aussparung ist so bemessen, dass zumindest in Teilbereichen des Umfangs ein Zwischenraum zwischen dem Außenumfang eines eingesetzten Feststellelements und dem Innenumfang der Ausnehmung besteht. Dadurch wird ein Spiel realisiert, welches eine translatorische Bewegung des Anschlagkörpers senkrecht relativ zur Feststellelementachse zulässt, also in Richtung der Lenkspindellängsachse. Der Zwischenraum bzw. das dadurch gebildete Spiel ermöglicht die Verdrehung des Nockens bzw. Nockenabschnitts des Feststellelements innerhalb der Ausnehmung. wobei abhängig von der Winkelstellung der Nocken mit seiner von der Feststellelementschwenkachse radial vorstehenden Nockenkontur an einer Steuerfläche am Innenumfang der Ausnehmung anschlägt und den Anschlagkörper relativ zur Feststellelementschwenkachse verschiebt. Dabei drückt ein Nocken in Freigabestellung so gegen eine Steuerfläche, dass der Anschlagkörper relativ zur Feststellelementschwenkachse mit zumindest einer Bewegungskomponente in Normalenrichtung der Anschlagfläche verschoben wird, also der Abstand der Anschlagfläche von der Feststellelementschwenkachse größer ist als in der Verriegelungsstellung. In der Verriegelungsstellung kann der Anschlagkörper entgegen der Normalenrichtung der Anschlagfläche zurückgezogen sein, so dass die Anschlagfläche entsprechend einen kleineren Abstand von der Feststellelementschwenkachse hat.

In einer bevorzugten Ausführungsform hat der Anschlagkörper eine erste Steuerfläche und eine zweite Steuerfläche, wobei die erste Steuerfläche bezogen auf die Feststellelementschwenkachse in einem ersten Umfangsbereich angeordnet ist, in dem sich die Anschlagfläche befindet, und die zweite Umfangsfläche in einem bezüglich der Feststellelementschwenkachse gegenüberliegenden zweiten Umfangsbereich. Die einander gegenüberliegenden Umfangsbereiche können gebildet werden durch jeweils halbe Umfangsflächenbereiche, die von der Anschlagfläche aus gesehen diesseits oder jenseits der Feststellelementschwenkachse liegen. Durch Verschwenkung des Nockens bzw. Nockenabschnitts gegen die erste Steuerfläche, aus der Verriegelungsstellung in die Freigabestellung, wird diese radial nach außen gedrückt und die Anschlagfläche von der Feststellelementschwenkachse weg, d.h. mit zumindest einer Bewegungskomponente in ihrer Normalenrichtung translatorisch bewegt. Wird nun das Feststellelement in Gegenrichtung zurück verschwenkt, aus der Freigabestellung in die Verriegelungsstellung, wird der oder ein weiterer Nocken oder Nockenabschnitt gegen die zweite Steuerfläche verschwenkt, so dass entsprechend der Anschlagkörper entgegen der Normalenrichtung der Anschlagfläche bewegt wird, folglich der Abstand zwischen Anschlagfläche und Feststellelementschwenkachse verkürzt wird. Durch die beiden Steuerflächen kann folglich eine Zwangsbewegung des Anschlagkörpers und damit der Anschlagfläche in beide translatorische Bewegungsrichtungen in Richtung der Lenkspindellängsachse realisiert werden.

Eine vorteilhafte Weiterbildung der Erfindung sieht vor, dass zumindest eine Steuerfläche als tangentialer, ebener Abschnitt der Innenwand der Ausnehmung ausgebildet ist. Bei einer Verschwenkung wird der Nocken mit seiner Nockenkontur tangential, unter einem flachen Winkel gegen die Steuerfläche bewegt, wodurch ein günstiger Kraftübertragungs- und Bewegungsverlauf des Anschlagkörpers erreicht wird.

Vorzugsweise weist die Ausnehmung mindestens einen als Steuerfläche ausgebildeten ersten Innenumfangsbereich und einen relativ dazu mit einem größeren Abstand zur Feststellelementschwenkachse ausgebildeten zweiten Innenumfangsbereich auf. In dem ersten Innenumfangsbereich ist mindestens eine Steuerfläche mit der vorangehend beschriebenen Funktionsweise realisiert. Benachbart zu einer Steuerfläche oder zwischen Steuerflächen befindet sich zumindest ein Innenumfangsbereich, in dem der Innenradius oder Querschnitt der Ausnehmung so groß bemessen ist, dass die Nockenkontur bei einer Drehung des Feststellelements dort nicht in Kontakt mit dem Innenumfang der Ausnehmung kommt. Mit anderen Worten wird ein bezüglich der Feststellelementschwenkachse radial nach außen zurückspringender Umfangsbereich gebildet, den der Nocken beim Verdrehen berührungsfrei passiert und auf den folglich vom Nocken keine Kraft ausgeübt wird.

Besonders bevorzugt hat die Ausnehmung einen vieleckigen Querschnitt, beispielsweise rechteckig. Dadurch, dass der Nockenabschnitt des Feststellelements ebenfalls vieleckig mit derselben Grundform, aber kleineren Abmessungen gestaltet wird, bilden die Kanten an den Ecken des Vielecks Nocken, die bei einer relativen Verdrehung die Seitenflächen der vieleckigen Ausnehmung kontaktieren und den Anschlagkörper bewegen.

Sämtliche vorangehend beschriebenen Ausführungsformen lassen sich besonders günstig dadurch realisieren, dass der Anschlagkörper als Kunststoff-Formteil ausgebildet ist. Derartige Formteile können aus geeignetem Kunststoff präzise und wirtschaftlich im Spritzguss gefertigt werden.

Bei einer bevorzugten Ausführungsform der Erfindung ist ein Vorspannelement an dem Anschlagkörper angebracht. Unter angebracht ist sowohl eine Anordnung bestehend aus zwei oder mehreren Teilen, die zu einem Bauteil fest oder lösbar verbunden sind zu verstehen, als auch eine einstückige Ausbildung zu verstehen. Der Anschlagkörper kann mit dem Vorspannelement einteilig ausgebildet. Das heißt der Körper ist ein einzelnes integrales Bauteil, das nicht durch ein Zusammensetzen mehrerer Bauteile mittels Fügeoperationen gebildet ist. Allerdings kann der Anschlagkörper zusammen mit dem Vorspannelement auch in Form eines aus einem Mehrkomponenten-Kunststoff gebildet sein, wobei beides zusammen bevorzugt in einem Spritzgussverfahren hergestellt ist. Es ist aber auch denkbar und möglich, das Vorspannelement als separates, beispielsweise aus Federstahl gebildetes, Bauteil auszubilden und mit dem Anschlagkörper mit einer Fügeoperation zu verbinden oder diese Elemente in einem Spritzgussverfahren direkt bei der Herstellung des Anschlagkörpers miteinander zu verbinden. Dieses Vorspannelement kann als Federzunge ausgebildet sein, die sich von dem Kopplungsabschnitt aus gesehen zu einer der Anschlagfläche gegenüberliegenden Seite erstreckt. Das Vorspannelement sorgt für eine federnde Vorspannung des Anschlagkörpers sowohl in der Freigabestellung als auch in der Verriegelungsstellung, und bewirkt bzw. unterstützt die Bewegung des Anschlagstücks relativ zum Feststellelement, wie dies bereits weiter oben erläutert ist.

Die Erfindung bezieht sich weiterhin auf ein Verfahren zur Verstellung einer Lenksäule für ein Kraftfahrzeug, wobei eine Manteleinheit, in der eine Lenkspindel um deren Lenkspindellängsachse drehbar gelagert ist, relativ zu einer an dem Kraftfahrzeug fixierten oder fixierbaren Konsoleneinheit verstellt wird, wobei die Manteleinheit in oder an der Konsoleneinheit in zumindest einer Richtung parallel und/oder quer zur Lenkspindellängsachse verstellbar gehalten und von einem Feststellmechanismus in voneinander verschiedenen Positionen feststellbar ist und der Feststellmechanismus zumindest ein um eine Feststellelementschwenkachse drehbar gelagertes Feststellelement aufweist, wobei die Manteleinheit in zumindest einer Verriegelungsstellung des Feststellelementes in ihrer Position in oder an der Konsoleneinheit festgestellt ist und in zumindest einer Freigabestellung des Feststellelementes die Manteleinheit relativ zur Konsoleneinheit in zumindest einer der Richtungen parallel und/oder quer zur Lenkspindellängsachse verstellbar ist, wobei die Lenksäule zumindest einen bewegbar gelagerten und mit dem Feststellelement direkt oder indirekt zusammenwirkenden Anschlagkörper mit einer Anschlagfläche aufweist, welcher in der Freigabestellung des Feststellelementes in einer ersten Stellung angeordnet ist, in der er die Verstellbarkeit der Manteleinheit relativ zur Konsoleneinheit in zumindest einer der Richtungen parallel und/oder quer zur Lenkspindellängsachse begrenzt ist, und in der Verriegelungsstellung des Feststellelementes in zumindest einer zweiten Stellung angeordnet ist, in der er ausser Eingriff mit der Manteleinheit steht.

Zur Lösung der oben geschilderten Problematik wird zur Verriegelung vorgeschlagen, dass der Anschlagkörper zwischen der Freigabestellung und der Verriegelungsstellung in eine Lösestellung gebracht wird, wobei die Anschlagfläche des Anschlagkörpers aus der Freigabestellung in Richtung der Lenkspindellängsachse translatorisch auf die Feststellelementschwenkachse zu bewegt wird.

Zur Durchführung der Entriegelung bei der Verstellung wird vorgeschlagen, dass der Anschlagkörper zwischen der Verriegelungsstellung und der Freigabestellung in eine Lösestellung gebracht wird, wobei die Anschlagfläche des Anschlagkörpers (8) aus der Verriegelungsstellung in Richtung der Lenkspindellängsachse translatorisch von der Feststellelementschwenkachse weg bewegt wird.

Die Besonderheit des erfindungsgemäßen Verfahrens ist, dass der Anschlagkörper nicht wie im Stand der Technik bekannt lediglich quer zur Manteleinheit bewegt wird oder um eine senkrecht zur Lenkspindellängsachse ausgerichteten Achse verdreht wird, d.h. durch Verschwenken des Feststellelements entweder in die von der Manteleinheit entfernte Verriegelungsstellung oder die an der Manteleinheit anliegende Freigabestellung gebracht wird, sondern dazwischen eine zusätzliche translatorische Bewegung entlang der Manteleinheit ausgeführt wird, d.h. in Richtung der Lenkspindellängsachse. Dadurch wird eine Zwischenposition des Anschlagkörpers relativ zur Manteleinheit realisiert, die sogenannte Lösestellung. In dieser Lösestellung liegt der Anschlagkörper immer noch an der Manteleinheit an, wie in der Freigabestellung, ist jedoch gegenüber der Freigabestellung translatorisch verschoben. Dadurch werden die eingangs geschilderten Probleme bei der Verstellung einer Lenksäule gelöst, und insbesondere die Sicherheit im Hinblick auf das Crashverhalten erheblich erhöht.

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Darstellung einer erfindungsgemäßen Lenksäule eines Kraftfahrzeugs in einer Verriegelungsstellung;
- Figur 2: eine schematische perspektivische Darstellung einer erfindungsgemäßen Lenksäule entsprechend Figur 1 in einer Freigabestellung;
- Figur 3: schematisch eine Schnittansicht der Lenksäule der vorstehenden Figuren 1 und 2 entlang einer Lenkspindellängsachse;
- Figur 4: eine schematische Detailansicht eines Schnitts der Lenksäule in der Verriegelungsstellung;
- Figur 5: eine schematische Detailansicht eines Schnitts der Lenksäule zwischen der Verriegelungsstellung und der Freigabestellung;
- Figur 6: eine schematische Detailansicht eines Schnitts der Lenksäule in der Freigabestellung;
- Figur 7: eine schematische perspektivische Darstellung eines Anschlagkörpers;
- Figur 8: eine schematische perspektivische Darstellung eines Anschlagkörpers in einer weiteren Ausführungsform;
- Figur 9: eine schematische perspektivische Darstellung eines Anschlagkörpers in einer weiteren Ausführungsform;
- Figur 10: eine schematische Detailansicht eines Schnitts einer aus dem Stand der Technik bekannten Lenksäule in der Freigabestellung;
- Figur 11: eine schematische Detailansicht eines Schnitts der aus dem Stand der Technik bekannten Lenksäule in der Verriegelungsstellung; und
- Figur 12: eine schematische Detailansicht eines Schnitts der aus dem Stand der Technik bekannten Lenksäule nach einem Missbrauch.

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet. Die Erfindung wird an Ausführungsbeispielen, bei denen die Klemmung durch ein System bewirkt wird, bei dem das Feststellelement 15, in diesem Fall ein Spannbolzen, beim Übergang von der geöffneten in die verriegelte Position in seiner Längsachse verschoben wird. Diese Verschiebung wird in den Ausführungsbeispielen durch ein Nocken/Nockenfolgersystem erreicht. Derartige Systeme sind allgemein bekannt und werden daher hier nicht weiter erläutert. Alternativ kann auch ein System verwendet werden, bei dem die axiale Verschiebung des Spannbolzens auf andere Weise bewirkt wird, beispielsweise durch ein System mit Wälzkörpern, die auf entsprechenden Bahnen abrollen oder einem Kippstift-System. Es ist auch denkbar und möglich, die Erfindung auf Systeme anzuwenden, bei der die eigentliche Fixierung der Manteleinheit 1 gegenüber der Konsoleneinheit 4, auf eine andere Art und Weise bewirkt wird. Entscheidend ist, dass es das Feststellelement 15 gibt, mit dem ein Anschlagkörper 8 in der erfindungsgemässen Art und Weise zusammen wirken kann.

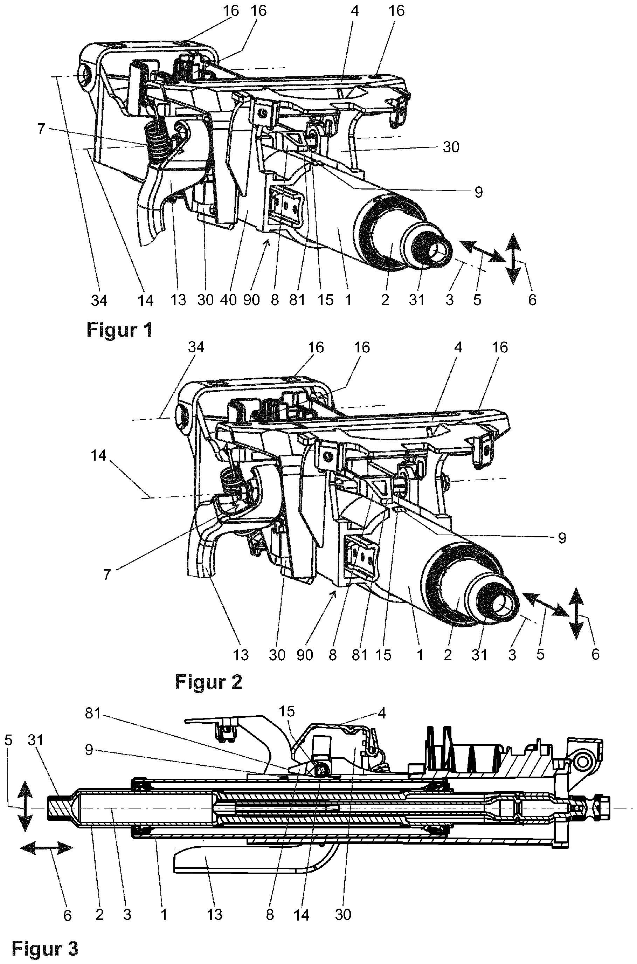

Bei dem ersten erfindungsgemässen Ausführungsbeispiel zeigt Figur 1 eine perspektivische Darstellung auf die Lenksäule, wobei sich das Feststellelement 15 in der Verriegelungsstellung befindet, in der die Manteleinheit 1 an der Konsoleneinheit 4 in ihrer Position festgestellt ist. Dies entspricht derjenigen Stellung des Feststellelementes 15, welche im Normalfall gewählt wird, um das Fahrzeug zu fahren. Folglich befindet sich das Feststellelement 15 in der Regel auch in der in Figur 1 dargestellten Verriegelungsstellung, wenn es zu einer Kollision bzw. einem Crash beim Fahren des Fahrzeuges kommt. Das Feststellelement 15 ist mit einem Anschlagkörper 8 gekoppelt, wobei dieser Anschlagkörper 8 über eine Anschlagfläche 81 verfügt. Diese Anschlagfläche 81 steht mit der an dem Mantelrohr 1 ausgebildeten Gegenanschlagfläche 9 außer Eingriff, so dass die Manteleinheit 1 im Fall der Kollision bzw. des Crashs ohne Behinderung kollabieren. Mit anderen Worten wird ein Energieabbau im Kollisionsfall aufgrund dieser Massnahme durch den Anschlagkörper 8 nicht gestört bzw. nicht mit zusätzlichen unerwünschten Kraftspitzen belastet.

Figur 1 zeigt weiterhin die Konsoleneinheit 4 , welche mittels der Befestigungslaschen 16 am Fahrzeug fixierbar ist, zwei Seitenwangen 30 aufweist, zwischen denen die Manteleinheit 1 und eine Kastenschwinge 40 der Lenksäule gehalten ist. In der Manteleinheit 1 ist, wie an sich bekannt, die Lenkspindel 2 drehbar um die Lenkspindellängsachse 3 gelagert. Der Feststellmechanismus bei diesem Ausführungsbeispiel beruht im Wesentlichen auf Reibschluss. In der Verriegelungsstellung des Feststellelementes 15 gemäss Figur 1 werden die Seitenwangen 30 vom Feststellmechanismus so gegen die Kastenschwinge 40 und diese wiederum auf Manteleinheit 1 gedrückt, dass diese mittels Reibschluss in ihre Position relativ zur Konsoleneinheit 4 festgehalten ist. Dies führt dazu, dass das hier nicht dargestellte, aber am, bezogen auf die Fahrtrichtung des Fahrzeuges, hinteren Ende 31 der Lenkspindel 2 angebrachte Lenkrad in seiner Position fixiert ist. Kommt es in dieser Stellung zu einem Crash bzw. zu einer Kollision und wird der Fahrzeuglenker auf das hier nicht dargestellte Lenkrad geschleudert, so wird die Lenkspindel 2 samt Manteleinheit 1 relativ zur Konsoleneinheit 4 in der Art verschoben, dass sich das hinteren Ende 31 der Lenkspindel 2 in Richtung hin zur Konsoleneinheit 4 bewegt. Am Beginn dieser Verschiebung der klemmend in der Konsoleneinheit 4 gehaltenen Manteleinheit 1 ist bei dem gezeigten Ausführungsbeispiel zunächst die Haftreibung zu überwinden. Hierdurch kann eine Belastungsspitze entstehen. Anschliessend wird bei dieser Art des Energieabsorptionsmechanismus die durch das Belasten des Lenkrades in die Lenksäule eingebrachte Energie durch die Reibung absorbiert, welche beim Verschieben der Manteleinheit 1 relativ zur Konsoleneinheit 4 überwunden werden muss, wenn sich das Feststellelement 15 gemäss Figur 1 in der Verriegelungsstellung befindet.
Um im geschilderten Kollisionsfall den auf das Lenkrad geschleuderten Fahrzeuglenker nicht noch zusätzlich mit einer Kraft- bzw. Belastungsspitze zu belasten, ist der Anschlagkörper 8 in der Verriegelungsstellung des Feststellelementes 15 so angeordnet, dass er im Verlaufe der Verschiebung nicht in Eingriff mit der Manteleinheit 1 bzw. einem Gegenanschlag 9 an der Manteleinheit 1 gelangt.

Die Lenksäule ist zusätzlich mit einer Energieabsorptionsmechanismus 90 ausgestattet, der im Beispiel zwei ineinandergreifende C-Profile umfasst, die mit Reibung Energie bei Verschiebung der Manteleinheit 1 gegenüber der Kastenschwinge 40 aufzehrt. Denkbar und möglich ist auch der Einsatz anderer Energieabsorptionsvorrichtungen, wie sie aus dem Stand der Technik bekannt sind.

Figur 2 zeigt die Freigabestellung des Feststellelementes 15 in perspektivischer Darstellung auf die Lenksäule, in der die Manteleinheit 1 relativ zur Konsoleneinheit 4 verstellt werden kann. Bei dem gezeigten Ausführungsbeispiel ist in dieser Freigabestellung des Feststellelementes 15 sowohl eine Verstellung der Manteleinheit 1 in Richtung 5 parallel zur Lenkspindellängsachse 3, als auch in den Richtungen 6 quer zur Lenkspindellängsachse 3 möglich. Bei der hier realisierten Verstellmöglichkeit quer zur Lenkspindellängsachse 3 handelt es sich um eine Höhenverstellung. Die Höhenverstellung wird ermöglicht, durch einen Schwenkhebel 13 , der die Manteleinheit 1 in Längsrichtung der Lenkspindellängsachse 3 verschiebbar führt und um die Schwenkachse 34 in der Konsoleneinheit in Höhenverstellrichtung (= Neigungsverstellung) verschwenkbar bzw. verdrehbar gelagert ist. Auf diese Weise ist die Lenksäule in Längsrichtung 5 und in Höhenrichtung 6 verstellbar ausgeführt.

Der Anschlagkörper 8 ist im Vergleich zu der in der Figur 1 dargestellten Verriegelungsstellung um die Feststellelementschwenkachse 14 verschwenkt, so dass dieser auf der Manteleinheit 1 aufliegt und erfindungsgemäß einen vergrösserten Abstand zwischen der Anschlagfläche 81 und der Feststellelementschwenkachse 14 aufweist. Mit anderen Worten wurde der Anschlagkörper 8 mit der Anschlagfläche 81 zu dem Gegenanschlag 9 hin bewegt. Der Anschlagkörper 8 kann somit mit seiner Anschlagfläche 81 in Eingriff mit dem Gegenanschlag 9 gebracht werden, wenn die Manteleinheit in Längsverstellrichtung voll eingeschoben wird. Der Anschlagkörper 8 begrenzt im Zusammenwirken mit dem Gegenanschlag 9 den Verstellweg in Längsrichtung der Manteleinheit 1 in der Freigabestellung des Feststellelements.

Figur 3 zeigt eine Schnittdarstellung der Lenksäule aus den Figuren 1 entlang der Lenkspindellängsachse 3. Dabei ist zu erkennen, dass sich die Lenksäule in der Verriegelungsstellung befindet, da sich der Anschlagkörper 8 ausser Eingriff mit dem Gegenanschlag 9 der Manteleinheit 1 steht, so dass eine Verlagerung der Manteleinheit 1 und der Lenkspindel 2 in Längsrichtung nicht durch ein Zusammenwirken der Anschlagfläche 81 des Anschlagkörpers 8 und des Gegenanschlags 9 begrenzt ist. Die Manteleinheit 1 befindet sich bzgl. der Längsverstellung in einem im Normalbetrieb vollkommen eingeschoben Zustand, so dass der vorgesehene Längsverstellbereich sich in seiner Begrenzung befindet.

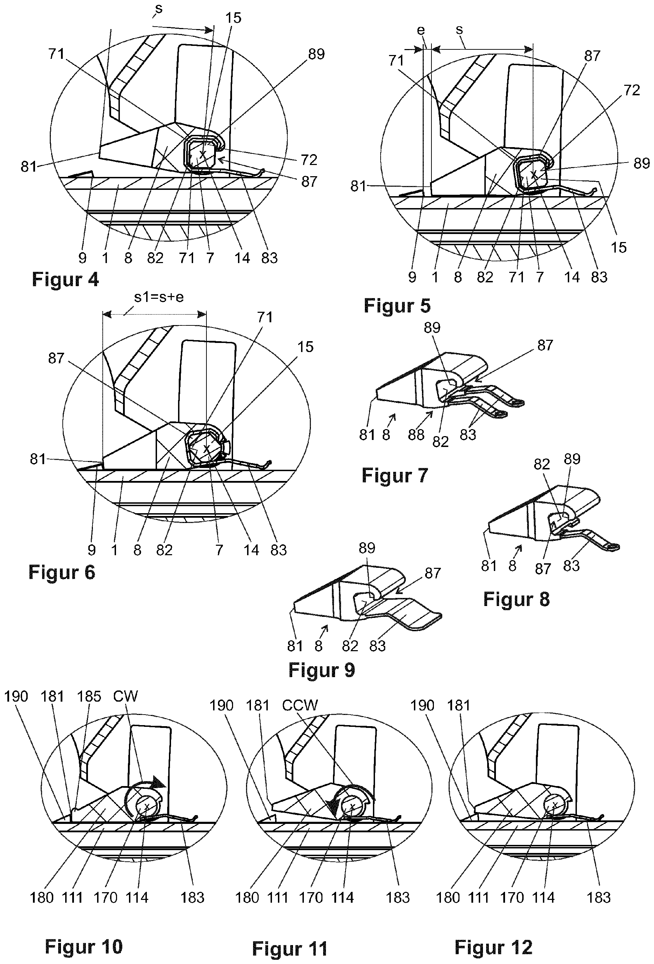

Figur 4 zeigt eine Detailansicht einer Schnittdarstellung der Lenksäule, wobei sich das Feststellelement 15 bzw. die Lenksäule in der Verriegelungsstellung befindet. Die Anschlagfläche 81 des Anschlagkörpers ist durch entsprechende Drehung des Anschlagkörpers 8 mit dem Feststellelement 15 um die Feststellementschwenkachse 14 ausser Eingriff mit dem Gegenanschlag 9 der Manteleinheit 1 gebracht. Dadurch ist eine Verlagerung der Manteleinheit 1 und der Lenkspindel 2 in Längsrichtung nicht durch ein Zusammenwirken der Anschlagfläche 81 des Anschlagkörpers 8 und des Gegenanschlags 9 begrenzt. Der Anschlagkörper 8 weist ein Vorspannelement 83 auf, wobei das Vorspannelement 83 auf der Manteleinheit 1 aufliegt und den Anschlagkörper 8 mit einem Moment um die Festellelementschwenkachse 14 des Feststellelements in Eingriffsdrehrichtung vorspannt.

Der Anschlagkörper 8 umfasst weiterhin eine Steuerfläche 82, die mit einem Nockenabschnitt 71 auf dem Festellelement 15 zusammenwirkt. Die Anschlagfläche 81 ist mit dem Abstand s zur Feststellelementeschwenkachse 14 beabstandet. Die Steuerfläche 82 ist bezogen auf die Feststellelementschwenkachse 14 in einem ersten Umfangsbereich der Ausnehmung 87 angeordnet, auf der Seite, wo sich die Anschlagfläche 81 am Anschlagkörper 8 befindet, also in der Zeichnung links der Feststellelementschwenkachse 14.

Weiterhin weist der Anschlagkörper 8 eine zweite Steuerfläche 89 auf, die mit einem zweiten Nockenabschnitt 72 des Festellelements 15 zusammenwirkt. Die zweite Steuerfläche 89 ist in einem bezüglich der Feststellelementschwenkachse (14) gegenüberliegenden zweiten Umfangsbereich angeordnet, der dem ersten Umfangsbereich gegenüberliegt, also in der Zeichnung rechts der Feststellelementschwenkachse 14.

Figur 5 zeigt eine Detailansicht einer Schnittdarstellung der Lenksäule, wobei sich das Feststellelement 15 bzw. die Lenksäule in einem Überführungszustand, auch als Lösestellung bezeichnet, zwischen der Verriegelungsstellung und der Freigabestellung befindet. Das Feststellelement 15 und der Anschlagkörper 8 wurde im Vergleich zu der Verriegelungsstellung der Figur 4 um die Feststellelementschwenkachse 14 im Gegenuhrzeigersinn verschwenkt, wobei der Anschlagkörper 8 auf der Manteleinheit 1 aufliegt und somit an einer Weiterdrehung um die Feststellelementschwenkachse 14 gehindert wird. Der Wert des Abstands s zwischen der Feststellelementschwenkachse 14 und der Anschlagfläche 81 des Anschlagkörpers 8 ist identisch mit Abstand s, in der Verriegelungsstellung entsprechend der Figur 4.
Figur 6 zeigt eine Detailansicht einer Schnittdarstellung der Lenksäule, wobei sich das Feststellelement 15 bzw. die Lenksäule in der Freigabestellung befindet. Die Lenksäule ist dabei in einer Anschlagposition in Bezug auf die Längsverstellung dargestellt. Die Manteleinheit 1 ist entsprechend der Darstellung vollständig in Längsrichtung eingeschoben und befindet sich somit an einem Ende des Verstellbereichs, der durch das Zusammenwirken der Anschlagfläche 81 des Anschlagkörpers 8 mit dem Gegenanschlag 9 festgelegt ist. Das Feststellelement 15 wurde im Vergleich zu der Verriegelungsstellung gemäß Figur 4 und dem Überführungszustand gemäß Figur 5 weiter im Gegenuhrzeigersinn verschwenkt. Da der Anschlagkörper 8 bereits im Überführungszustand der Figur 5 auf dem Mantelrohr auflag und somit gegen ein weiteres Verschwenken im Gegenuhrzeigersinn blockiert ist, erfolgte eine relative Verschwenkung des Feststellelements 15 gegenüber dem Anschlagkörper. Durch diese weitere Verschwenkung des Festellelements 15 um die Feststellelementschwenkachse 14 relativ zum Anschlagkörper 8 erfolgte ein Zusammenwirken des Nockenabschnitts 71 des Feststellelements 15 mit der Steuerfläche 82 des Anschlagkörpers 8. Durch dieses Zusammenwirken des Nockenabschnitts 71 und der Steuerfläche 82 im Zuge der relativen Verschwenkung vergrössert sich der Abstand s1 zwischen der Anschlagfläche 81 und der Feststellelementschwenkachse 14 gegenüber dem in der Figur 4 dargestellten Abstand s um den Betrag e in der Verriegelungsstellung. Mit anderen Worten gleitet der Nockenabschnitt 71 über die Steuerfläche 82 des Anschlagkörpers 8 und drückt den Anschlagkörper 8 und somit auch die Anschlagfläche 81 von der Feststellelementschwenkachse 14 weg, so dass der Anschlagkörper 8 über die Oberfläche der Manteleinheit 1 in Richtung zum Gegenanschlag 9 gleitet. In der Freigabestellung kann nun die Manteleinheit 1 gegenüber dem Fahrzeug verstellt werden.

Für den Fall, dass die Manteleinheit 1 in der vollständig eingeschobenen Position fixiert werden soll, wird die Feststelleinrichtung 7 in die Verriegelungsstellung ausgehend von der Darstellung entsprechend der Figur 6 und weiterführend entsprechend der Darstellung der Figur 5 in den Zustand entsprechend der Darstellung der Figur 4 überführt. Hierzu wird das Feststellelement 15 in Richtung des Uhrzeigersinns verschwenkt. Durch die Vorspannung mittels des Vorspannelements 83 erfolgt eine Rückdrehung des Anschlagkörpers 8 bei gleichzeitiger Verkürzung des Abstandes s1 um den Betrag e zwischen der Feststellelementschwenkachse 14 und der Anschlagfläche 81. Dabei wird der zweite Nockenabschnitt gegen die zweite Steuerfläche 89 bewegt, wobei der Anschlagkörper 8 um den Betrag e in Richtung auf die Feststellelementschwenkachse 14 zu bewegt wird. In diesem verriegelten Zustand der Lenksäule kann die Manteleinheit 1 nicht verstellt werden. Soll eine erneute Verstellung bewirkt werden, so wird die Lenksäule wieder in die Freigabestellung überführt. Wie den Figuren 4, 5, 6 zu entnehmen ist, wird das Aufsetzen des Anschlagkörpers auf dem Gegenanschlag durch die erfindungsgemäße Verschiebung des Anschlagkörpers 8 ausgeschlossen . Dadurch kann ein Überrutschen der Anschläge verhindert werden und entsprechend die Begrenzung der Verstellung sichergestellt werden.

In Figur 5 ist die sogenannte Lösestellung des erfindungsgemäßen Verfahrens dargestellt, in welcher der Anschlagkörper 8 im Vergleich zur Freigabestellung gemäß Figur 6 um den Betrag e in Richtung der Lenkspindellängsachse 3 translatorisch verschoben ist.

In den Figuren 10 bis 12 ist ein aus dem Stand der Technik bekannter Anschlagkörper 180 schematisch dargestellt, der mit einem Gegenanschlag 190 zusammenwirkt, um die Verstellung der Manteleinheit 111 zu begrenzen. Die restliche Lenksäule weist einen analogen Aufbau wie die in den Figuren 1 bis 3 dargestellten Lenksäule auf.

Der Anschlagkörper 180 ist mit einem Feststellelement 170 drehfest gekoppelt und mit diesem Feststellelement 170 zusammen verschwenkbar, um den Anschlagkörper 180 in eine erste Stellung zu bringen, in der dieser mit dem Gegenanschlag 190 zusammenwirkt, um die Verstellung der Manteleinheit 111 in Längsverstellrichtung zu begrenzen und weiterhin in eine zweite Stellung zu überführen, in der der Anschlagkörper 190 außer Eingriff mit dem Gegenanschlag 190 steht. Dabei nimmt der Anschlagkörper 180 in der Freigabestellung des Feststellelements 170 die erste Stellung ein und dem entsprechend nimmt der Anschlagkörper 180 in der Verriegelungsstellung des Feststellelements 180 die zweite Stellung ein.

In der Figur 10 ist der aus dem Stand der Technik bekannte Anschlagkörper 180 in einer möglichen Verstellsituation schematisch dargestellt. Der Anschlagkörper 180 befindet sich in der Darstellung in einer ersten Stellung, bei der die Verstellung der Manteleinheit 111 in Längsrichtung zu begrenzt wird, wobei der Anschlag vollständig erreicht ist. Dabei wird das Mantelrohr 111 mit dem Gegenanschlag 190 gegen die Anschlagfläche 181 des Anschlagkörpers 180 verschoben, wobei der Anschlagkörper 180 durch das Einwirken des nicht dargestellten Fahrers unter Vorspannung belastet wird, wobei der Anschlagkörper 180 eine elastische Verformung 185 aufweist, d.h. elastisch zusammengedrückt wird.

Zur Überführung von der Freigabestellung in die Verriegelungsstellung wird das Feststellelement 170 zusammen mit dem Anschlagkörper 180 um die Feststellelementschwenkachse 114 in Richtung CW verdreht bzw. verschwenkt, wie dies in Figur 11 gezeigt ist. Durch ein Verdrehen des Feststellelements 170 zusammen mit dem Anschlagkörper 180 wurde die Lenksäule in die Verriegelungsstellung überführt, wobei der Anschlagkörper 180 eine elastische Rückfederung erfahren hat, nach dem dieser außer Eingriff mit dem Gegenanschlag 190 gebracht wurde. Durch die elastische Rückfederung des Anschlagkörpers 180 erfährt der Anschlagkörper 180 eine räumliche Ausdehnung, d.h. die Anschlagfläche 181 hat sich von der Feststellelementschwenkachse 114 weg bewegt, so dass es bei Verdrehung des Feststellelements 170 zusammen mit dem Anschlagkörper in die Richtung CCW zu einem Aufliegen des Anschlagkörpers 170 auf den Gegenanschlag 190 kommen kann, wie es in der Figur 12 schematisch dargestellt ist. Dies hat zur Folge, dass die Verstellung der Manteleinheit 111 nicht mehr begrenzt ist und die Manteleinheit 111 über den im Normalbetrieb der Lenksäule üblichen Verstellweg hinaus verstellt werden kann und die Lenksäule in dieser Position in die Verriegelungsstellung überführbar ist. Erfolgt in dieser missbräuchlich eingestellten Verstellposition eine Kollision bzw. Crash so steht nicht mehr der für die Energieabsorption erforderliche Crashweg zur Verfügung, wodurch das Verletzungsrisiko des Fahrers erheblich ansteigt.

In Figur 7 ist eine perspektivische Darstellung des Anschlagelements 8 aus den Figuren 1 bis 6 dargestellt. Dieses Anschlagselement 8 umfasst die Anschlagfläche 81 und einen Kopplungsabschnitt 88, der eine Ausnehmung 87 zur Aufnahme des Feststellelements 15 aufweist, wobei diese Ausnehmung 87 die Steuerfläche 82 zum Zusammenwirken mit dem Nockenabschnitt 71 des Feststellelements 15 aufweist. Weiterhin verfügt das Anschlagelement 8 über die zwei Vorspannelemente 83, die in Form einer Blattfeder ausgeführt sind. Diese Blattfedern sind voneinander beabstandet und von einem Kunststoff, der den Kopplungsabschnitt 88 und die Anschlagsfläche 81 ausbildet, teilweise umgeben, um eine Einbettung der Vorspannelemente 83 zu erreichen. Der Abstand zwischen den beiden Vorspannelementen 83 ist so gewählt, dass der Gegenanschlag 9, der im Normalbetrieb mit der Anschlagfläche 81 zusammenwirkt, im Crash ohne Behinderung das Anschlagelement 8 passieren kann. Entsprechend kann sich der Gegenanschlag 9 im Fall einer Kollision bzw. Crashs zwischen den Vorspannelementen 83 hindurchbewegen. Somit kann sichergestellt werden, dass keine zusätzliche Kraftspitze durch das Passieren des Gegenanschlags 9 während dem Kollabieren der Manteleinheit 1 im Crashfall auftritt.

In der Figur 8 ist eine perspektivische Darstellung einer alternativen Ausführungsform des Anschlagelements 8 dargestellt. Dieses Anschlagselement 8 umfasst die Anschlagfläche 81 und den Kopplungsabschnitt 88, der eine Ausnehmung 87 zur Aufnahme des Feststellelements 15 aufweist, wobei diese Ausnehmung 87 die Steuerfläche 82 zum Zusammenwirken mit dem Nockenabschnitt 71 des Feststellelement 15 aufweist. Weiterhin verfügt das Anschlagelement 8 über ein aussermittig angeordnetes Vorspannelement 83, das in Form einer Blattfeder ausgeführt sind. Diese Blattfeder ist von einem Kunststoff, der den Kopplungsabschnitt 88 und die Anschlagsfläche 81 ausbildet, teilweise umgeben, um eine Einbettung des Vorspannelements 83 zu erreichen. Das Vorspannelement 83 ist so angeordnet, dass der Gegenanschlag 9, der im Normalbetrieb mit der Anschlagfläche 81 zusammenwirkt, im Crash ohne Behinderung das Anschlagelement 8 passieren kann.

In Figur 9 ist eine perspektivische Darstellung einer weiteren alternativen Ausführungsform des Anschlagelements 8 dargestellt. Dieses Anschlagselement 8 umfasst ebenfalls die Anschlagfläche 81 und den Kopplungsabschnitt 88, der eine Ausnehmung 87 zur Aufnahme des Feststellelements 15 aufweist. Die Ausnehmung 87 weist die Steuerfläche 82 zum Zusammenwirken mit dem Nockenabschnitt 71 des Feststellelements 15 auf. Das Anschlagelement 8 umfasst weiterhin das Vorspannelement 83, wobei das gesamte Anschlagelement 8 integral aus Kunststoff ausgebildet ist. Mit Vorteil kann das Anschlagselement 8 aus einem einzigen Kunststoff in einem Spritzgussverfahren dargestellt sein. Es kann aber zur Darstellung bestimmter Vorspannungen und der Erreichung einer hohen Dauerhaltbarkeit von Vorteil sein, einen MehrkomponentenKunststoff-Spritzguss einzusetzen.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Manteleinheit
- 111: Manteleinheit
- 114: Feststellelementschwenkachse
- 170: Feststellelement
- 180: Anschlagkörper
- 181: Anschlagfläche
- 183: Vorspannelement
- 185: Verformung
- 190: Gegenanschlag
- 13: Schwenkhebel
- 14: Feststellelementschwenkachse
- 15: Feststellelement
- 16: Befestigungslaschen
- 30: Seitenwangen
- 31: Ende
- 34: Schwenkachse
- 2: Lenkspindel
- 3: Lenkspindellängsachse
- 4: Konsoleneinheit
- 5: Längsrichtung
- 6: Höhenrichtung
- 7: Feststellmechanismus
- 71: Nockenabschnitt
- 72: Nockenabschnitt
- 8: Anschlagkörper
- 81: Anschlagfläche
- 82: Steuerfläche
- 83: Vorspannelement
- 81: Anschlagfläche
- 87: Ausnehmung
- 88: Kopplungsabschnitt
- 89: Steuerfläche
- 9: Gegenanschlag
- 90: Energieabsorptionsmechanismus
- s1: Abstand
- s: Abstand
- e: Betrag
- CW: Richtung
- CCW: Richtung

## Patentansprüche

1. Lenksäule für ein Kraftfahrzeug mit einer Manteleinheit (1), in der eine Lenkspindel (2) um deren Lenkspindellängsachse (3) drehbar gelagert ist, und einer, an dem Kraftfahrzeug fixierten oder fixierbaren Konsoleneinheit (4), wobei die Manteleinheit (1) in oder an der Konsoleneinheit (4) in zumindest einer Richtung (5, 6) parallel und/oder quer zur Lenkspindellängsachse (3) verstellbar gehalten und von einem Feststellmechanismus in voneinander verschiedenen Positionen feststellbar ist und der Feststellmechanismus (7) zumindest ein um eine Feststellelementschwenkachse (14) drehbar gelagertes Feststellelement (15) aufweist, wobei die Manteleinheit (1) in zumindest einer Verriegelungsstellung des Feststellelementes (15) in ihrer Position in oder an der Konsoleneinheit (4) festgestellt ist und in zumindest einer Freigabestellung des Feststellelementes (15) die Manteleinheit (1) relativ zur Konsoleneinheit (4) in zumindest einer der Richtungen parallel und/oder quer zur Lenkspindellängsachse (3) verstellbar ist, wobei die Lenksäule zumindest einen bewegbar gelagerten und mit dem Feststellelement (15) direkt oder indirekt zusammenwirkenden Anschlagkörper (8) aufweist, welcher in der Freigabestellung des Feststellelementes (15) in einer ersten Stellung angeordnet ist, in der er die Verstellbarkeit der Manteleinheit (1) relativ zur Konsoleneinheit (4) in zumindest einer der Richtungen (5, 6) parallel und/oder quer zur Lenkspindellängsachse (3) begrenzt ist, und in der Verriegelungsstellung des Feststellelementes (15) in zumindest einer zweiten Stellung angeordnet ist, in der er ausser Eingriff mit der Manteleinheit (1) steht,
**dadurch gekennzeichnet, dass**
der Anschlagkörper (8) eine Anschlagfläche (81) aufweist, deren Abstand (s) zur Feststellelementschwenkachse (14) in der Freigabestellung größer ist, als in der Verriegelungsstellung.

2. Lenksäule nach Anspruch 1, **dadurch gekennzeichnet, dass** die Lenksäule zumindest ein Gegenanschlag (9) aufweist, wobei die Anschlagfläche (81) des Anschlagkörper (8) in der Freigabestellung des Feststellelementes (15) zur Begrenzung der Verstellbarkeit der Manteleinheit (1) relativ zur Konsoleneinheit (4) in zumindest einer der Richtungen (5, 6) parallel und/oder quer zur Lenkspindellängsachse (3) mit dem Gegenanschlag (9) zusammenwirkt.

3. Lenksäule nach einem der vorhergehenden Ansprüche, **dadurch gekennzeichnet, dass** der Anschlagkörper (8) um die Feststellelementschwenkachse (14) verdrehbar ist.

4. Lenksäule nach Anspruch 1, **dadurch gekennzeichnet, dass** das Feststellelement (15) einen Nocken oder einen Nockenabschnitt (71) umfasst, wobei dieser Nocken oder Nockenabschnitt (71) mit einer Steuerfläche (82) des Anschlagkörpers (8) zusammenwirkt.

5. Lenksäule nach einem der vorhergehenden Ansprüche, **dadurch gekennzeichnet, dass** ein Vorspannelement, beispielsweise in Form einer Federzunge (83), vorgesehen ist, das mit der Anschlagkörper (8) mit einem Vorspannelement gekoppelt ist oder ein Vorspannelement (83) aufweist.

6. Lenksäule nach einem der vorhergehenden Ansprüche, **dadurch gekennzeichnet, dass** der Anschlagkörper (8) zumindest teilweise aus einem Kunststoff besteht.

7. Lenksäule nach einem der vorhergehenden Ansprüche, **dadurch gekennzeichnet, dass** der Anschlagkörper (8) während der Überführung ausgehend von der Verriegelungsstellung in die Freigabestellung und/oder der Überführung ausgehend von der Freigabestellung in die Verriegelungsstellung eine Verschiebung in Richtung der Lenkspindellängsachse (3) erfolgt.

8. Lenksäule nach einem der vorhergehenden Ansprüche, **dadurch gekennzeichnet, dass** die Differenz (e) des Abstandes (s1) in der Freigabestellung und des Abstand (s) in der Verriegelungsstellung einen Wert zwischen 0,2 mm und 5 mm aufweist.

9. Anschlagkörper (8) der Lenksäule nach Anspruch 1, umfassend einen Kopplungsabschnitt (88) zur Aufnahme eines Feststellelements (15) einer Lenksäule, und zumindest eine Anschlagfläche (81) zum Zusammenwirken mit einem Gegenanschlag (9) der Lenksäule, **gekennzeichnet dadurch, dass** der Kopplungsabschnitt (84) eine Steuerfläche (82) umfasst zum Zusammenwirken mit einem Nockenabschnitt (71) an dem Feststellelement (15),

10. Anschlagkörper (8) nach Anspruch 9, **dadurch gekennzeichnet, dass** die Steuerfläche (82) tangential zu einem Umfangskreis um den Nockenabschnitt (71) des Feststellelements (15) angeordnet ist.

11. Anschlagkörper (8) nach Anspruch 9, **dadurch gekennzeichnet, dass** die Steuerfläche (82) parallel zur Feststellelementschwenkachse (14) ausgerichtet ist und die Anschlagfläche (81) parallel zur Feststellelementschwenkachse (14) ausgerichtet ist, wobei die Normalenrichtungen der Steuerfläche (82) und der Anschlagfläche (81) einen gemeinsame Vektor-Komponente haben.

12. Anschlagkörper (8) nach Anspruch 9, **dadurch gekennzeichnet, dass** im eingebauten Zustand der Kopplungsabschnitt (88) mit einer Ausnehmung (87) das Feststellelement (15) zumindest zum Teil mit einem Zwischenraum umschließt.

13. Anschlagkörper (8) nach Anspruch 12, **dadurch gekennzeichnet, dass** die Steuerfläche (82) auf einer Innenfläche der Ausnehmung (87) des Kopplungsabschnitts (88) ausgebildet ist.

14. Anschlagkörper (8) nach Anspruch 12, **dadurch gekennzeichnet, dass** zumindest eine Steuerfläche (82, 89) als tangentialer, ebener Abschnitt der Innenwand der Ausnehmung (87) ausgebildet ist.

15. Anschlagkörper (8) nach Anspruch 12, **dadurch gekennzeichnet, dass** die Ausnehmung (87) mindestens einen als Steuerfläche (82, 89) ausgebildeten ersten Innenumfangsbereich und einen relativ dazu mit einem größeren Abstand zur Feststellelementschwenkachse (14) ausgebildeten zweiten Innenumfangsbereich aufweist.

16. Anschlagkörper (8) nach Anspruch 12, **dadurch gekennzeichnet, dass** der Anschlagkörper eine erste Steuerfläche (82) und eine zweite Steuerfläche (89) hat, wobei die erste Steuerfläche (82) bezogen auf die Feststellelementschwenkachse (14) in einem ersten Umfangsbereich der Ausnehmung (87) angeordnet ist, auf der Seite, wo sich die Anschlagfläche (81) am Anschlagkörper (8) befindet, und die zweite Steuerfläche (89) in einem bezüglich der Feststellelementschwenkachse (14) gegenüberliegenden zweiten Umfangsbereich.

17. Anschlagkörper (8) nach Anspruch 12, **dadurch gekennzeichnet, dass** die Ausnehmung (87) einen vieleckigen Querschnitt hat, bevorzugt rechteckig.

18. Anschlagkörper (8) nach Anspruch 9, **dadurch gekennzeichnet, dass** ein Vorspannelement (83) an dem Anschlagkörper (83) angebracht ist.

19. Anschlagkörper (8) nach Anspruch 18, **dadurch gekennzeichnet, dass** das Vorspannelement (83) als Federzunge (83) ausgebildet ist, die sich von dem Kopplungsabschnitt (88) aus gesehen zu einer der Anschlagfläche (81) gegenüberliegenden Seite erstreckt.

20. Verfahren zur Verstellung einer Lenksäule für ein Kraftfahrzeug, wobei eine Manteleinheit (1), in der eine Lenkspindel (2) um deren Lenkspindellängsachse (3) drehbar gelagert ist, relativ zu einer an dem Kraftfahrzeug fixierten oder fixierbaren Konsoleneinheit (4) verstellt wird, wobei die Manteleinheit (1) in oder an der Konsoleneinheit (4) in zumindest einer Richtung (5, 6) parallel und/oder quer zur Lenkspindellängsachse (3) verstellbar gehalten und von einem Feststellmechanismus in voneinander verschiedenen Positionen feststellbar ist und der Feststellmechanismus (7) zumindest ein um eine Feststellelementschwenkachse (14) drehbar gelagertes Feststellelement (15) aufweist, wobei die Manteleinheit (1) in zumindest einer Verriegelungsstellung des Feststellelementes (15) in ihrer Position in oder an der Konsoleneinheit (4) festgestellt ist und in zumindest einer Freigabestellung des Feststellelementes (15) die Manteleinheit (1) relativ zur Konsoleneinheit (4) in zumindest einer der Richtungen parallel und/oder quer zur Lenkspindellängsachse (3) verstellbar ist, wobei die Lenksäule zumindest einen bewegbar gelagerten und mit dem Feststellelement (15) direkt oder indirekt zusammenwirkenden Anschlagkörper (8) mit einer Anschlagfläche (81) aufweist, welcher in der Freigabestellung des Feststellelementes (15) in einer ersten Stellung angeordnet ist, in der er die Verstellbarkeit der Manteleinheit (1) relativ zur Konsoleneinheit (4) in zumindest einer der Richtungen (5, 6) parallel und/oder quer zur Lenkspindellängsachse (3) begrenzt ist, und in der Verriegelungsstellung des Feststellelementes (15) in zumindest einer zweiten Stellung angeordnet ist, in der er ausser Eingriff mit der Manteleinheit (1) steht,
**gekennzeichnet dadurch,**
**dass** der Anschlagkörper (8) zwischen der Freigabestellung und der Verriegelungsstellung in eine Lösestellung gebracht wird, wobei die Anschlagfläche (81) des Anschlagkörpers (8) aus der Freigabestellung in Richtung der Lenkspindellängsachse (3) translatorisch auf die Feststellelementschwenkachse (14) zu bewegt wird.

21. Verfahren zur Verstellung einer Lenksäule für ein Kraftfahrzeug, wobei eine Manteleinheit (1), in der eine Lenkspindel (2) um deren Lenkspindellängsachse (3) drehbar gelagert ist, relativ zu einer an dem Kraftfahrzeug fixierten oder fixierbaren Konsoleneinheit (4) verstellt wird, wobei die Manteleinheit (1) in oder an der Konsoleneinheit (4) in zumindest einer Richtung (5, 6) parallel und/oder quer zur Lenkspindellängsachse (3) verstellbar gehalten und von einem Feststellmechanismus in voneinander verschiedenen Positionen feststellbar ist und der Feststellmechanismus (7) zumindest ein um eine Feststellelementschwenkachse (14) drehbar gelagertes Feststellelement (15) aufweist, wobei die Manteleinheit (1) in zumindest einer Verriegelungsstellung des Feststellelementes (15) in ihrer Position in oder an der Konsoleneinheit (4) festgestellt ist und in zumindest einer Freigabestellung des Feststellelementes (15) die Manteleinheit (1) relativ zur Konsoleneinheit (4) in zumindest einer der Richtungen parallel und/oder quer zur Lenkspindellängsachse (3) verstellbar ist, wobei die Lenksäule zumindest einen bewegbar gelagerten und mit dem Feststellelement (15) direkt oder indirekt zusammenwirkenden Anschlagkörper (8) mit einer Anschlagfläche (81) aufweist, welcher in der Freigabestellung des Feststellelementes (15) in einer ersten Stellung angeordnet ist, in der er die Verstellbarkeit der Manteleinheit (1) relativ zur Konsoleneinheit (4) in zumindest einer der Richtungen (5, 6) parallel und/oder quer zur Lenkspindellängsachse (3) begrenzt ist, und in der Verriegelungsstellung des Feststellelementes (15) in zumindest einer zweiten Stellung angeordnet ist, in der er ausser Eingriff mit der Manteleinheit (1) steht,
**gekennzeichnet dadurch,**
**dass** der Anschlagkörper (8) zwischen der Verriegelungsstellung und der Freigabestellung in eine Lösestellung gebracht wird, wobei die Anschlagfläche (81) des Anschlagkörpers (8) aus der Verriegelungsstellung in Richtung der Lenkspindellängsachse (3) translatorisch von der Feststellelementschwenkachse (14) weg bewegt wird.

## Claims

1. Steering column for a motor vehicle having a casing unit (1), in which a steering spindle (2) is mounted such that it can be rotated about its steering spindle longitudinal axis (3), and a bracket unit (4) which is fixed or can be fixed on the motor vehicle, the casing unit (1) being held in or on the bracket unit (4) such that it can be adjusted in at least one direction (5, 6) parallel and/or transversely with respect to the steering spindle longitudinal axis (3), and it being possible for said casing unit (1) to be fixed by a fixing mechanism in positions which differ from one another, and the fixing mechanism (7) having at least one fixing element (15) which is mounted such that it can be rotated about a fixing element pivot axis (14), the casing unit (1) being fixed in its position in or on the bracket unit (4) in at least one locked position of the fixing element (15), and it being possible for the casing unit (1) to be adjusted relative to the bracket unit (4) in at least one of the directions parallel and/or transversely with respect to the steering spindle longitudinal axis (3) in at least one released position of the fixing element (15), the steering column having at least one movably mounted stop body (8) which interacts directly or indirectly with the fixing element (15) and, in the released position of the fixing element (15), is arranged in a first position, in which it the adjustability of the casing unit (1) relative to the bracket unit (4) is limited in at least one of the directions (5, 6) parallel and/or transversely with respect to the steering spindle longitudinal axis (3), and, in the locked position of the fixing element (15), is arranged in at least one second position, in which it is out of engagement with the casing unit (1),
**characterized in that**
the stop body (8) has a stop face (81), the spacing (s) of which from the fixing element pivot axis (14) is greater in the released position than in the locked position.

2. Steering column according to Claim 1, **characterized in that** the steering column has at least one counterstop (9), the stop face (81) of the stop body (8) interacting with the counterstop (9) in the released position of the fixing element (15) in order to limit the adjustability of the casing unit (1) relative to the bracket unit (4) in at least one of the directions (5, 6) parallel and/or transversely with respect to the steering spindle longitudinal axis (3).

3. Steering column according to either of the preceding claims, **characterized in that** the stop body (8) can be rotated about the fixing element pivot axis (14).

4. Steering column according to Claim 1, **characterized in that** the fixing element (15) comprises a cam or a cam section (71), said cam or cam section (71) interacting with a control face (82) of the stop body (8).

5. Steering column according to one of the preceding claims, **characterized in that** a prestressing element, for example in the form of a spring tongue (83), is provided which is coupled to the stop body (8) with a prestressing element or has a prestressing element (83).

6. Steering column according to one of the preceding claims, **characterized in that** the stop body (8) consists at least partially of a plastic.

7. Steering column according to one of the preceding claims, **characterized in that**, during the transfer, starting from the locked position, into the released position and/or the transfer, starting from the released position, into the locked position, the stop body (8) makes a displacement in the direction of the steering spindle longitudinal axis (3).

8. Steering column according to one of the preceding claims, **characterized in that** the difference (e) of the spacing (s1) in the released position and the spacing (s) in the locked position has a value between 0.2 mm and 5 mm.

9. Stop body (8) of the steering column according to Claim 1, comprising a coupling section (88) for receiving a fixing element (15) of a steering column, and at least one stop face (81) for interacting with a counterstop (9) of the steering column, **characterized in that** the coupling section (84) comprises a control face (82) for interacting with a cam section (71) on the fixing element (15) .

10. Stop body (8) according to Claim 9, **characterized in that** the control face (82) is arranged tangentially with respect to a circumferential circle around the cam section (71) of the fixing element (15).

11. Stop body (8) according to Claim 9, **characterized in that** the control face (82) is oriented parallel to the fixing element pivot axis (14), and the stop face (81) is oriented parallel to the fixing element pivot axis (14), the normal directions of the control face (82) and the stop face (81) having a common vector component.

12. Stop body (8) according to Claim 9, **characterized in that**, in the installed state, the coupling section (88) encloses the fixing element (15) by way of a recess (87), at least partially with an intermediate space.

13. Stop body (8) according to Claim 12, **characterized in that** the control face (82) is configured on an inner face of the recess (87) of the coupling section (88).

14. Stop body (8) according to Claim 12, **characterized in that** at least one control face (82, 89) is configured as a tangential, planar section of the inner wall of the recess (87).

15. Stop body (8) according to Claim 12, **characterized in that** the recess (87) has at least one first inner circumferential region which is configured as a control face (82, 89) and one second inner circumferential region which is configured relative to the former at a greater spacing from the fixing element pivot axis (14).

16. Stop body (8) according to Claim 12, **characterized in that** the stop body has a first control face (82) and a second control face (89), the first control face (82) being arranged, in relation to the fixing element pivot axis (14), in a first circumferential region of the recess (87), on the side where the stop face (81) is situated on the stop body (8), and the second control face (89) being arranged in a second circumferential region which lies opposite with regard to the fixing element pivot axis (14).

17. Stop body (8) according to Claim 12, **characterized in that** the recess (87) has a polygonal cross section, preferably a rectangular cross section.

18. Stop body (8) according to Claim 9, **characterized in that** a prestressing element (83) is attached on the stop body (83).

19. Stop body (8) according to Claim 18, **characterized in that** the prestressing element (83) is configured as a spring tongue (83) which, as viewed from the coupling section (88), extends to a side which lies opposite the stop face (81).

20. Method for adjusting a steering column for a motor vehicle, a casing unit (1), in which a steering spindle (2) is mounted such that it can be rotated about its steering spindle longitudinal axis (3), being adjusted relative to a bracket unit (4) which is fixed or can be fixed on the motor vehicle, the casing unit (1) being held in or on the bracket unit (4) such that it can be adjusted in at least one direction (5, 6) parallel and/or transversely with respect to the steering spindle longitudinal axis (3), and it being possible for said casing unit (1) to be fixed by a fixing mechanism in positions which differ from one another, and the fixing mechanism (7) having at least one fixing element (15) which is mounted such that it can be rotated about a fixing element pivot axis (14), the casing unit (1) being fixed in its position in or on the bracket unit (4) in at least one locked position of the fixing element (15), and it being possible for the casing unit (1) to be adjusted relative to the bracket unit (4) in at least one of the directions parallel and/or transversely with respect to the steering spindle longitudinal axis (3) in at least one released position of the fixing element (15), the steering column having at least one movably mounted stop body (8) with a stop face (81), which stop body (8) interacts directly or indirectly with the fixing element (15) and, in the released position of the fixing element (15), is arranged in a first position, in which it limits the adjustability of the casing unit (1) relative to the bracket unit (4) in at least one of the directions (5, 6) parallel and/or transversely with respect to the steering spindle longitudinal axis (3), and, in the locked position of the fixing element (15), is arranged in at least one second position, in which it is out of engagement with the casing unit (1),
**characterized**
**in that** the stop body (8) is moved into a loose position between the released position and the locked position, the stop face (81) of the stop body (8) being moved out of the released position in the direction of the steering spindle longitudinal axis (3) in a translational manner toward the fixing element pivot axis (14).

21. Method for adjusting a steering column for a motor vehicle, a casing unit (1), in which a steering spindle (2) is mounted such that it can be rotated about its steering spindle longitudinal axis (3), being adjusted relative to a bracket unit (4) which is fixed or can be fixed on the motor vehicle, the casing unit (1) being held in or on the bracket unit (4) such that it can be adjusted in at least one direction (5, 6) parallel and/or transversely with respect to the steering spindle longitudinal axis (3), and it being possible for said casing unit (1) to be fixed by a fixing mechanism in positions which differ from one another, and the fixing mechanism (7) having at least one fixing element (15) which is mounted such that it can be rotated about a fixing element pivot axis (14), the casing unit (1) being fixed in its position in or on the bracket unit (4) in at least one locked position of the fixing element (15), and it being possible for the casing unit (1) to be adjusted relative to the bracket unit (4) in at least one of the directions parallel and/or transversely with respect to the steering spindle longitudinal axis (3) in at least one released position of the fixing element (15), the steering column having at least one movably mounted stop body (8) with a stop face (81), which stop body (8) interacts directly or indirectly with the fixing element (15) and, in the released position of the fixing element (15), is arranged in a first position, in which it limits the adjustability of the casing unit (1) relative to the bracket unit (4) in at least one of the directions (5, 6) parallel and/or transversely with respect to the steering spindle longitudinal axis (3), and, in the locked position of the fixing element (15), is arranged in at least one second position, in which it is out of engagement with the casing unit (1),
**characterized**
**in that** the stop body (8) is moved into a loose position between the locked position and the released position, the stop face (81) of the stop body (8) being moved out of the locked position in the direction of the steering spindle longitudinal axis (3) in a translational manner away from the fixing element pivot axis (14).

## Revendications

1. Colonne de direction pour un véhicule automobile comprenant une unité d'enveloppe (1) dans laquelle est supporté un arbre de direction (2) de manière à pouvoir tourner autour de son axe longitudinal d'arbre de direction (3) et une unité de console (4) fixée ou pouvant être fixée au véhicule automobile, l'unité d'enveloppe (1) étant retenue dans ou sur l'unité de console (4) de manière déplaçable dans au moins une direction (5, 6) parallèlement et/ou transversalement à l'axe longitudinal d'arbre de direction (3) et pouvant être fixée par un mécanisme de fixation dans des positions différentes les unes des autres, et le mécanisme de fixation (7) présentant au moins un élément de fixation (15) supporté de manière à pouvoir tourner autour d'un axe de pivotement d'élément de fixation (14), l'unité d'enveloppe (1), dans au moins une position de verrouillage de l'élément de fixation (15), étant fixée dans sa position dans ou sur l'unité de console (4) et dans au moins une position de libération de l'élément de fixation (15), l'unité d'enveloppe (1) pouvant être déplacée par rapport à l'unité de console (4) dans au moins l'une des directions parallèlement et/ou transversalement à l'axe longitudinal d'arbre de direction (3), la colonne de direction présentant au moins un corps de butée (8) supporté de manière déplaçable et coopérant directement ou indirectement avec l'élément de fixation (15), lequel corps de butée, dans la position de libération de l'élément de fixation (15), est disposé dans une première position dans laquelle il la capacité de déplacement de l'unité d'enveloppe (1) par rapport à l'unité de console (4) est limitée dans au moins l'une des directions (5, 6) parallèlement et/ou transversalement à l'axe longitudinal d'arbre de direction (3), et dans la position de verrouillage de l'élément de fixation (15), est disposé dans au moins une deuxième position dans laquelle il est hors d'engagement avec l'unité d'enveloppe (1),
**caractérisée en ce que**
le corps de butée (8) présente une surface de butée (81) dont la distance (s) à l'axe de pivotement de l'élément de fixation (14) est plus grande dans la position de libération que dans la position de verrouillage.

2. Colonne de direction selon la revendication 1, **caractérisée en ce que** la colonne de direction présente au moins une contre-butée (9), la surface de butée (81) du corps de butée (8), dans la position de libération de l'élément de fixation (15), coopérant avec la contre-butée (9) pour limiter la capacité de déplacement de l'unité d'enveloppe (1) par rapport à l'unité de console (4) dans au moins l'une des directions (5, 6) parallèlement et/ou transversalement à l'axe longitudinal d'arbre de direction (3).

3. Colonne de direction selon l'une quelconque des revendications précédentes, **caractérisée en ce que** le corps de butée (8) peut tourner autour de l'axe de pivotement d'élément de fixation (14).

4. Colonne de direction selon la revendication 1, **caractérisée en ce que** l'élément de fixation (15) comprend une came ou une portion de came (71), cette came ou cette portion de came (71) coopérant avec une surface de commande (82) du corps de butée (8).

5. Colonne de direction selon l'une quelconque des revendications précédentes, **caractérisée en ce qu'**un élément de précontrainte, par exemple sous la forme d'une langue de ressort (83), est prévu, lequel est accouplé au corps de butée (8) par un élément de précontrainte ou présente un élément de précontrainte (83).

6. Colonne de direction selon l'une quelconque des revendications précédentes, **caractérisée en ce que** le corps de butée (8) se compose au moins en partie d'un plastique.

7. Colonne de direction selon l'une quelconque des revendications précédentes, **caractérisée en ce que** le corps de butée (8), pendant le transfert de la position de verrouillage dans la position de libération et/ou pendant le transfert de la position de libération dans la position de verrouillage, s'effectue un déplacement dans la direction de l'axe longitudinal d'arbre de direction (3).

8. Colonne de direction selon l'une quelconque des revendications précédentes, **caractérisée en ce que** la différence (e) entre la distance (s1) dans la position de libération et la distance (s) dans la position de verrouillage présente une valeur comprise entre 0,2 mm et 5 mm.

9. Corps de butée (8) de la colonne de direction selon la revendication 1, comprenant une portion de couplage (88) pour recevoir un élément de fixation (15) d'une colonne de direction, et au moins une surface de butée (81) destinée à coopérer avec une contre-butée (9) de la colonne de direction, **caractérisé en ce que** la portion de couplage (84) comprend une surface de commande (82) pour coopérer avec une portion de came (71) au niveau de l'élément de fixation (15).

10. Corps de butée (8) selon la revendication 9, **caractérisé en ce que** la surface de commande (82) est disposée tangentiellement à un cercle périphérique autour de la portion de came (71) de l'élément de fixation (15).

11. Corps de butée (8) selon la revendication 9, **caractérisé en ce que** la surface de commande (82) est orientée parallèlement à l'axe de pivotement d'élément de fixation (14) et la surface de butée (81) est orientée parallèlement à l'axe de pivotement d'élément de fixation (14), les directions normales à la surface de commande (82) et à la surface de butée (81) ayant une composante vectorielle commune.

12. Corps de butée (8) selon la revendication 9, **caractérisé en ce que** dans l'état installé, la portion de couplage (88) avec un évidement (87) entoure au moins en partie l'élément de fixation (15) avec un espace intermédiaire.

13. Corps de butée (8) selon la revendication 12, **caractérisé en ce que** la surface de commande (82) est réalisée sur une surface intérieure de l'évidement (87) de la portion de couplage (88).

14. Corps de butée (8) selon la revendication 12, **caractérisé en ce qu'**au moins une surface de commande (82, 89) est réalisée sous forme de portion tangentielle, plane, de la paroi intérieure de l'évidement (87).

15. Corps de butée (8) selon la revendication 12, **caractérisé en ce que** l'évidement (87) présente au moins une première région périphérique intérieure réalisée sous forme de surface de commande (82, 89) et une deuxième région périphérique intérieure réalisée, par rapport à celle-ci, à une plus grande distance de l'axe de pivotement d'élément de fixation (14).

16. Corps de butée (8) selon la revendication 12, **caractérisé en ce que** le corps de butée présente une première surface de commande (82) et une deuxième surface de commande (89), la première surface de commande (82) étant disposée, par rapport à l'axe de pivotement d'élément de fixation (14), dans une première région périphérique de l'évidement (87), du côté où se trouve la surface de butée (81) sur le corps de butée (8) et la deuxième surface de commande (89) étant disposée dans une deuxième région périphérique opposée par rapport à l'axe de pivotement d'élément de fixation (14).

17. Corps de butée (8) selon la revendication 12, **caractérisé en ce que** l'évidement (87) présente une section transversale polygonale, de préférence rectangulaire.

18. Corps de butée (8) selon la revendication 9, **caractérisé en ce qu'**un élément de précontrainte (83) est monté sur le corps de butée (83).

19. Corps de butée (8) selon la revendication 18, **caractérisé en ce que** l'élément de précontrainte (83) est réalisé sous forme de langue de ressort (83) qui, vue depuis la portion de couplage (88), s'étend jusqu'à un côté opposé à la surface de butée (81).

20. Procédé de réglage d'une colonne de direction pour un véhicule automobile, une unité d'enveloppe (1), dans laquelle est supporté un arbre de direction (2) de manière à pouvoir tourner autour de son axe longitudinal d'arbre de direction (3), étant déplacée par rapport à une unité de console (4) fixée ou pouvant être fixée au véhicule automobile, l'unité d'enveloppe (1) étant retenue dans ou sur l'unité de console (4) de manière déplaçable dans au moins une direction (5, 6) parallèlement et/ou transversalement à l'axe longitudinal d'arbre de direction (3) et pouvant être fixée par un mécanisme de fixation dans des positions différentes les unes des autres et le mécanisme de fixation (7) présentant au moins un élément de fixation (15) supporté de manière à pouvoir tourner autour d'un axe de pivotement de l'élément de fixation (14), l'unité d'enveloppe (1), dans au moins une position de verrouillage de l'élément de fixation (15), étant fixée dans sa position dans ou sur l'unité de console (4), et dans au moins une position de libération de l'élément de fixation (15), l'unité d'enveloppe (1) pouvant être déplacée par rapport à l'unité de console (4) dans au moins l'une des directions parallèlement et/ou transversalement à l'axe longitudinal d'arbre de direction (3), la colonne de direction présentant au moins un corps de butée (8) avec une surface de butée (81), supporté de manière déplaçable et coopérant directement ou indirectement avec l'élément de fixation (15), lequel corps de butée, dans la position de libération de l'élément de fixation (15), est disposé dans une première position dans laquelle il la capacité de déplacement de l'unité d'enveloppe (1) par rapport à l'unité de console (4) est limitée dans au moins l'une des directions (5, 6) parallèlement et/ou transversalement à l'axe longitudinal d'arbre de direction (3), et dans la position de verrouillage de l'élément de fixation (15), est disposé dans au moins une deuxième position dans laquelle il est hors d'engagement avec l'unité d'enveloppe (1),
**caractérisé en ce que**
le corps de butée (8) est amené entre la position de libération et la position de verrouillage dans une position de desserrage, la surface de butée (81) du corps de butée (8) étant déplacée de la position de libération dans la direction de l'axe longitudinal d'arbre de direction (3) en translation vers l'axe de pivotement d'élément de fixation (14).

21. Procédé de réglage d'une colonne de direction pour un véhicule automobile, une unité d'enveloppe (1), dans laquelle est supporté un arbre de direction (2) de manière à pouvoir tourner autour de son axe longitudinal d'arbre de direction (3), étant déplacée par rapport à une unité de console (4) fixée ou pouvant être fixée au véhicule automobile, l'unité d'enveloppe (1) étant retenue dans ou sur l'unité de console (4) de manière déplaçable dans au moins une direction (5, 6) parallèlement et/ou transversalement à l'axe longitudinal d'arbre de direction (3) et pouvant être fixée par un mécanisme de fixation dans des positions différentes les unes des autres et le mécanisme de fixation (7) présentant au moins un élément de fixation (15) supporté de manière à pouvoir tourner autour d'un axe de pivotement d'élément de fixation (14), l'unité d'enveloppe (1), dans au moins une position de verrouillage de l'élément de fixation (15), étant fixée dans sa position dans ou sur l'unité de console (4), et dans au moins une position de libération de l'élément de fixation (15), l'unité d'enveloppe (1) pouvant être déplacée par rapport à l'unité de console (4) dans au moins l'une des directions parallèlement et/ou transversalement à l'axe longitudinal d'arbre de direction (3), la colonne de direction présentant au moins un corps de butée (8) avec une surface de butée (81), supporté de manière déplaçable et coopérant directement ou indirectement avec l'élément de fixation (15), lequel corps de butée, dans la position de libération de l'élément de fixation (15), est disposé dans une première position dans laquelle il la capacité de déplacement de l'unité d'enveloppe (1) par rapport à l'unité de console (4) est limitée dans au moins l'une des directions (5, 6) parallèlement et/ou transversalement à l'axe longitudinal d'arbre de direction (3), et dans la position de verrouillage de l'élément de fixation (15), est disposé dans au moins une deuxième position dans laquelle il est hors d'engagement avec l'unité d'enveloppe (1),
**caractérisé en ce que**
le corps de butée (8) est amené entre la position de verrouillage et la position de libération dans une position de desserrage, la surface de butée (81) du corps de butée (8) étant déplacée de la position de verrouillage dans la direction de l'axe longitudinal d'arbre de direction (3) en translation à l'écart de l'axe de pivotement d'élément de fixation (14).
